# FASCICULE DE BREVET EUROPEEN

(11) **EP 0 840 763 B1**
(45) Date de publication et mention de la délivrance du brevet: **24.07.2002**
(21) Numéro de dépôt: 97925104.8
(22) Date de dépôt: 20.05.1997
(51) Int. Cl.: C08L 23/20, C08L 23/16

(54) **ELASTOMERE RETICULE A TRANSFORMATION THERMOPLASTIQUE, SON PROCEDE DE FABRICATION ET SES UTILISATIONS**
BEIM THERMOPLASTISCHEN ÜBERGANG VERNETZTE ELASTOMERE, VERFAHREN ZU IHRER HERSTELLUNG UND IHRE VERWENDUNG
CROSS-LINKED ELASTOMER CAPABLE OF THERMOPLASTIC TRANSFORMATION, METHOD OF MANUFACTURE AND USES THEREOF

(30) Priorité: 21.05.1996 FR 9606262
(43) Date de publication de la demande: 13.05.1998
(73) Titulaire: HUTCHINSON, 75008 Paris (FR)
(72) Inventeur: GAROIS, Nicolas, F-45200 Amilly (FR)
(74) Mandataire: Ores, Irène
(86) Numéro de dépôt international: FR9700881
(87) Numéro de publication internationale: WO9744390

(56) Documents cités:
- EP-A- 0 643 078
- US-A- 5 281 670

## Description

La présente Invention se rapporte à un élastomère réticulé à transformation thermoplastique ainsi qu'à son procédé de fabrication et à ses utilisations.

Pour la fabrication de certains articles tels que les joints et garnitures d'isolation et/ou d'étanchéité ainsi que les conduites, tuyaux, tubes ou analogues pour le transfert des fluides comme ceux utilisés par exemple par l'industrie automobile (dans les circuits de freinage, de refroidissement, d'assistance de direction ou encore de climatisation, ...), il est souhaitable de disposer de matériaux qui, tout en présentant des propriétés semblables à celles des élastomères et notamment, une aptitude à supporter des déformations importantes sans rupture et une capacité à retrouver leur géométrie initiale après des sollicitations du type allongement ou compression, même répétées, ainsi qu'une bonne tenue à la chaleur, aux agents chimiques et aux intempéries, peuvent être mis en oeuvre par les techniques et le matériel qu'utilisent les transformateurs de matières thermoplastiques, et ce, principalement, pour permettre le recyclage de ces articles ainsi que celui des déchets produits au cours de leur fabrication, recyclage que n'autorise pas l'utilisation d'élastomères.

Aussi, a-t-on proposé dans US-A-4,130,535 des "élastomères thermoplastiques" à base de polyoléfines qui présentent une structure constituée par une matrice de polypropylène non réticulée et des nodules de terpolymère éthylène/propylène/diène (EPDM) réticulés, de manière à présenter à la température d'utilisation - qui est inférieure à la température de fusion du polypropylène - un comportement analogue à celui des élastomères après vulcanisation, tandis que leur chauffage au dessus de cette température de fusion permet de les mettre en oeuvre comme des matières thermoplastiques.

Si ces matériaux présentent effectivement un certain nombre de propriétés équivalentes à celles des élastomères, ils montrent toutefois une déformation rémanente à l'allongement importante (supérieure à 50%) à des températures supérieures à 100°C, ce qui rend leur utilisation peu appropriée à la fabrication d'articles destinés à être utilisés dans des zones où règnent des températures de plus de 100°C comme peuvent l'être les joints et garnitures d'isolation et/ou d'étanchéité ou encore les conduites, tuyaux, tubes et analogues prévus pour assurer le transfert de fluides dans le compartiment moteur d'une automobile.

C'est, par conséquent, un but de l'Invention de fournir un matériau qui tout en étant apte à être mis en oeuvre et transformé comme une matière thermoplastique, présente un comportement mécanique analogue à celui des élastomères avec, en particulier, une faible déformation rémanente aux contraintes même lorsque celles-ci sont appliquées à des températures très élevées, ainsi qu'une bonne résistance à la chaleur, aux intempéries et aux agents chimiques, de manière à pouvoir remplacer avantageusement ces élastomères et notamment, le caoutchouc, dans les fabrications industrielles dans lesquelles ils sont classiquement utilisés.

C'est, également, un but de l'Invention de fournir un tel matériau dont la fabrication soit simple et dont le coût de production soit économiquement intéressant.

Ces buts sont atteints selon la présente Invention par un élastomère réticulé à transformation thermoplastique, caractérisé en ce qu'il comprend au moins un élastomère à polymérisation par un catalyseur métallocène et une polyoléfine greffée.

Au sens de la présente Invention, on entend par élastomère à polymérisation par un catalyseur métallocène, tout élastomère constitué par un homopolymère, un copolymère ou un terpolymère dont la polymérisation a été réalisée au moyen d'un catalyseur métallocène.

Selon un mode de réalisation préféré de l'Invention, l'élastomère à polymérisation par un catalyseur métallocène est choisi parmi les poly(octène/éfchylène). Ces copolymères, qui sont encore appelés polyoctènes, sont disponibles auprès de la Société DU PONT DOW sous la dénomination commerciale ENGAGE et existent en différents grades qui se différencient notamment par leur densité, leur viscosité et leur dureté, et qui sont tous susceptibles d'être utilisés pour la réalisation d'un élastomère conforme à l'Invention.

Selon une disposition avantageuse de l'Invention, la polyoléfine greffée est choisie parmi le groupe qui comprend les polyéthylènes, les polypropylènes et les poly(éthylène/propylène) greffés d'acide acrylique, d'anhydride maléique ou de glycidylméthacrylate.

De préférence, on utilise un polypropylène greffé d'anhydride maléique dont la richesse en fonctions carboxyles permet de créer des liaisons supplémentaires entre ledit polypropylène et la matrice élastomérique formée par l'élastomère à polymérisation par un catalyseur métallocène. De plus, la Demanderesse a constaté que l'utilisation d'un poly(propylène/anhydride maléique) à teneur élevée en anhydride maléique permet de conférer à l'élastomère conforme à l'Invention des propriétés de rémanence à la compression particulièrement satisfaisantes. Au sens de la présente Invention, on entend par "teneur élevée en anhydride maléique", une teneur en anhydride maléique qui est supérieure ou égale à 1% en masse de la masse totale du poly(propylène/anhydride maléique).

Selon une autre disposition avantageuse de l'Invention, l'élastomère réticulé à transformation thermoplastique comprend, de plus, un poly(éthylène/propylène) (EPM) ou un poly(éthylène/propylène/diène) (EPDM) dont la présence permet de lui conférer un liant et un caractère plus élastique.

Tout copolymère d'éthylène et de propylène avec ou sans termonomère (diène) peut être utilisé pour réaliser un élastomère conforme à l'Invention. Toutefois, la Demanderesse a constaté que les terpolymères d'éthylène, propylène et d'éthylidène norbornène et notamment ceux qui présentent une masse moléculaire élevée (se traduisant par une viscosité élevée, c'est-à-dire supérieure ou égale à 50 points MOONEY), une faible teneur en éthylène (entre 50 et 70% et, de préférence, inférieure à 60% en masse de la masse totale des terpolymères) et une teneur élevée en éthylidène norbornène (supérieure ou égale à 8% en masse de la masse totale des terpolymères), conviennent particulièrement bien à la réalisation d'un élastomère conforme à l'Invention, en raison de ce que ces terpolymères présentent une grande réactivité, une cinétique de vulcanisation élevée, une densité pontale élevée et une faible déformation rémanente à la compression. De tels terpolymères d'éthylène, propylène et d'éthylidène norbornène sont par exemple disponibles auprès de la Société EXXON sous la dénomination commerciale VISTALON.

De plus, l'utilisation d'un terpolymère d'éthylène, propylène et d'éthylidène norbomène étendu à l'huile s'est révélée être particulièrement intéressante car elle se traduit par une plus grande facilité à effectuer le mélangeage des différents constituants nécessaires à la réalisation de l'élastomère conforme à l'Invention.

Conformément à l'Invention, l'élastomère réticulé à transformation thermoplastique comprend en parties en masse :
- 20 à 100 parties d'élastomère à polymérisation par un catalyseur métallocène,
- 5 à 50 parties de polyoléfine greffée, et
- 0 à 75 parties d'EPM ou d'EPDM.

Selon un mode de réalisation particulièrement préféré de l'élastomère réticulé à transformation thermoplastique, celui-ci présente la formulation qualitative et quantitative suivante, exprimée en parties en masse :
- 30 à 85 parties de polyoctène,
- 10 à 30 parties de poly(propylène/anhydride maléique), et
- 10 à 50 parties d'EPDM.

De manière avantageuse, l'élastomère réticulé à transformation thermoplastique conforme à l'Invention peut, également, renfermer un élastomère polyacrylique tel qu'un terpolymère d'éthylène, d'acrylate et d'acide acrylique ou un terpolymère de styrène, d'acrylonitrile et d'acrylate, qui joue le rôle d'agent anti-ultraviolets et d'agent filmogène et qui permet d'améliorer l'aspect de surface de l'élastomère lorsque celui-ci est mis en oeuvre par extrusion. Lorsqu'un tel élastomère polyacrylique est utilisé, il l'est de préférence à raison de 2 à 20 parties en masse pour 100 parties en masse du mélange élastomère à polymérisation par catalyseur métallocène/polyoléfine greffée/EPM ou EPDM.

De manière également avantageuse, l'élastomère réticulé à transformation thermoplastique peut contenir, de plus, un plastifiant dont la présence permet d'augmenter sa fluidité et, partant, de faciliter sa mise en oeuvre, ainsi que d'ajuster la dureté des produits issus de cette mise en oeuvre en fonction d'une valeur de dureté recherchée. De préférence, ce plastifiant est un plastifiant paraffinique du type de ceux commercialisés par la Société TOTAL sous la dénomination commerciale PLAXENE ou par la Société EXXON sous la dénomination commerciale FLEXON, et est utilisé à raison de 5 à 120 parties en masse pour 100 parties en masse du mélange élastomère à polymérisation par catalyseur métallocène/polyoléfine greffée/EPM ou EPDM. Toutefois, d'autres plastifiants tels qu'un polyalkylbenzène peuvent également convenir.

L'élastomère réticulé à transformation thermoplastique peut renfermer, aussi, des charges du type charges claires : silices, carbonates, argiles, craie, kaolin, ..., ou noirs de carbone. L'utilisation de ces derniers s'est révélée particulièrement avantageuse car ils permettent, non seulement de moduler certaines propriétés mécaniques de l'élastomère conforme à l'invention telles que la résistance à la rupture ou les modules de traction, mais aussi de lui conférer une excellente résistance à l'action des ultraviolets. Lorsque de telles charges sont présentes dans l'élastomère, elles le sont avantageusement à hauteur de 5 à 100 parties en masse pour 100 parties en masse du mélange élastomère à polymérisation par catalyseur métallocène/polyoléfine greffée/EPM ou EPDM.

L'élastomère réticulé à transformation thermoplastique peut contenir, en outre, d'autres adjuvants classiquement employés dans l'industrie des polymères comme, par exemple, des antistatiques, des lubrifiants, des antioxydants, des agents de couplage, des colorants, des agents de mise en oeuvre ou encore des promoteurs d'adhérence selon les propriétés que l'on souhaite lui donner pour autant, bien entendu, que ces adjuvants soient compatibles entre eux.

L'élastomère conforme à l'Invention est dit "réticulé" en raison de ce que sa préparation implique une réticulation de la matrice élastomérique qui le constitue, c'est-à-dire de l'élastomère à polymérisation par un catalyseur métallocène et, le cas échéant, des autres élastomères qu'il renferme (EPM ou EPDM, élastomère polyacrylique, ...).

De ce fait, l'élastomère conforme à l'Invention contient, avant réticulation, au moins un système de réticulation comprenant un ou plusieurs agents de réticulation convenablement choisis selon la nature des polymères entrant dans sa constitution et un ou plusieurs promoteurs de réticulation dont la fonction est d'activer la cinétique de la réaction et d'augmenter la densité de réticulation.

Selon une disposition préférée de l'Invention, ce système de réticulation comprend comme agent(s) de réticulation, un ou plusieurs peroxydes organiques choisis parmi le groupe comprenant le peroxyde de dicumyle, le peroxyde de 1,3-bis-(*t*-butyl-isopropyl)-benzène, le peroxyde de 2,5-diméthyl-2,5-bis-*t*-butylhexane et le 1,1-bis-(*t*-butyl)-3,3,5-triméthylcyclohexane, et comme promoteur(s) de réticulation, un ou plusieurs composés choisis parmi le groupe comprenant l'oxyde de zinc, l'acide stéarique, le N,N-m-phénylène-dimaléimide, les cyanurates de triallyle ou de triisoallyle, les méthacrylates (comme les méthacrylates de tétrahydrofurfuryle ou de 2-phénoxyéthyle), les diméthacrylates (comme les diméthacrylates d'éthylène glycol, de tétraéthylène glycol, de 1,4-butanediol ou de zinc), les triméthacrylates (comme le triméthacrylate de triméthylolpropane) et les diacrylates (comme le diacrylate de zinc).

Selon une autre disposition préférée de l'Invention, le système de réticulation est un système basé sur le soufre qui comprend, outre de l'oxyde de zinc et/ou de l'acide stéarique comme promoteur(s) de réticulation, un ou plusieurs accélérateurs donneurs de soufre tels que la 4,4-dithiomorpholine, le disulfure de tétraméthylthiurame, le tétrasulfure de dipentaméthylènethiurame ou le dibutyldithiocarbamate de zinc, et, éventuellement, un agent anti-réversion tel que le 1,3-bis-(*cis*traconimido-méthyl)benzène.

Selon une disposition particulièrement préférée de l'Invention, le système de réticulation comprend comme agent de réticulation, une résine phénolique choisie parmi les résines méthyl-phénolformaldéhyde et bromo-méthyl-phénolformaldéhyde alkylées réactives, et comme promoteur de réticulation, un polymère chloré tel qu'un polyéthylène chloré ou chlorosulfoné ou un polychloroprène, éventuellement associé à de l'oxyde de zinc et/ou de l'acide stéarique. En effet, ce dernier système de réticulation permet d'obtenir des élastomères qui, outre de présenter des propriétés mécaniques et de rémanence à l'allongement et à la compression extrêmement satisfaisantes, se caractérisent par un bel aspect de surface.

Dans tous les cas, le ou les agents de réticulation sont, de préférence, présents dans l'élastomère à hauteur de 1 à 10 parties en masse pour 100 parties en masse du mélange élastomère à polymérisation par un catalyseur métallocène/polyoléfine greffée/EPM ou EPDM, tandis que le ou les promoteurs de réticulation sont, de préférence, présents à hauteur de 0,5 à 12 parties en masse pour 100 parties en masse du mélange élastomère à polymérisation par un catalyseur métallocène/polyoléfine greffée/EPM ou EPDM.

Lorsque le système de vulcanisation est un système à base de soufre, le ou les accélérateurs donneurs de soufre sont, quant à eux, de préférence présents dans l'élastomère à hauteur de 1 à 7 parties en masse pour 100 parties en masse du mélange élastomère à polymérisation par un catalyseur métallocène/polyoléfine greffée/EPM ou EPDM.

Conformément à l'Invention, la réticulation de l'élastomère peut être réalisée au moyen de deux systèmes de réticulation. A titre d'exemple, on peut utiliser conjointement un système de réticulation basé sur le soufre et un système de réticulation basé sur les péroxydes organiques, ou un système de réticulation basé sur une résine phénolique et un système de réticulation basé sur les péroxydes organiques.

L'élastomère conforme à l'Invention est, par ailleurs, dit "à transformation thermoplastique" car sa transformation par les techniques et le matériel utilisés par la mise en oeuvre des matières thermoplastiques : thermoformage, moulage par injection, extrusion, formage, ..., s'est révélée extrêmement aisée.

Les élastomères réticulés à transformation thermoplastique conformes à l'Invention, tout en présentant des propriétés mécaniques en termes de dureté, de résistance à la rupture et d'allongement à la rupture équivalentes à celles des élastomères thermoplastiques de l'art antérieur précédemment évoqués, ont de meilleures propriétés de rémanence à la compression et à l'allongement que ces derniers. Cet avantage s'observe non seulement à court terme mais également à long terme où les élastomères conformes à l'Invention manifestent une tendance moindre au fluage.

La présente Invention a également pour objet un procédé de fabrication d'un élastomère réticulé à transformation thermoplastique tel que défini ci-dessus, caractérisé en ce qu'il comprend le mélange d'un élastomère à polymérisation par un catalyseur métallocène et d'une polyoléfine greffée en présence, éventuellement d'un poly(éthylène/propylène) (EPM) ou d'un poly(éthylène/propylène/diène) (EPDM), d'un élastomère polyacrylique, d'un plastifiant, de charges et/ou d'adjuvants, et la réticulation de ce mélange par un système de réticulation convenablement choisi à une température appropriée.

Selon un mode de mise en oeuvre préféré du procédé conforme à l'Invention, la température à laquelle est effectuée la réticulation est comprise entre 150 et 200°C.

Selon un mode de mise en oeuvre particulièrement préféré du procédé conforme à l'Invention, celui-ci comprend :
a) le mélange de l'élastomère à polymérisation par un catalyseur métallocène, de la polyoléfine greffée et du système de réticulation en présence, éventuellement, de l'EPM ou de l'EPDM, de l'élastomère polyacrylique, du plastifiant, des charges et/ou des adjuvants ;
b) le chauffage de ce mélange à une température comprise entre 150 et 200°C, et
c) son maintien à cette température pendant un temps compris entre 1 et 15 minutes, de manière à obtenir une réticulation optimale de l'élastomère.

Ce procédé peut être mis en oeuvre dans un mélangeur interne ou, en variante, dans une extrudeuse bi-vis ou du type BUS. La masse résultante est, selon le cas, calandrée ou extrudée, puis refroidie et soumise à une granulation. Les granulés ainsi obtenus sont prêts à être transformés - par chauffage de ces granulés à une température supérieure à la température de fusion de la polyoléfine greffée - en feuilles, plaques, profilés, tubes ou autres produits désirés.

La présente Invention a, aussi, pour objet l'utilisation d'un élastomère réticulé à transformation thermoplastique tel que défini ci-avant pour la fabrication de joints et garnitures d'isolation et/ou d'étanchéité tels qu'employés pour l'isolation thermique, phonique et/ou l'étanchéité à l'eau et à l'humidité, notamment dans le bâtiment et par l'industrie automobile (garnitures de portières par exemple).

La présente Invention a, en outre, pour objet l'utilisation d'un tel élastomère dans la fabrication de conduites, de tubes, de tuyaux, de tubulures, de raccords ou analogues pour le transfert de fluides. A titre d'exemples, on peut citer les conduites, tuyaux et autres éléments prévus pour l'acheminement des fluides qui sont utilisés par l'industrie automobile dans les circuits de freinage, de refroidissement, d'assistance de direction ou encore de climatisation.

La présente Invention sera mieux comprise à l'aide du complément de description qui suit et qui se réfère à des exemples de réalisation de l'élastomère réticulé à transformation thermoplastique conforme à l'Invention.

Il va de soi, toutefois, que ces exemples sont donnés uniquement à titre d'illustrations de l'objet de l'Invention dont ils ne constituent en aucune manière une limitation.

### EXEMPLE 1 :

On prépare trois élastomères réticulés à transformation thermoplastique conformes à l'Invention - ci-après élastomères 1, 2 et 3 - en mélangeant dans un mélangeur interne et sous un cisaillement approprié :

### Elastomère 1 :

- 60 parties en masse de polyoctène tel que commercialisé par la Société DU PONT DOW sous la dénomination commerciale ENGAGE 8180,
- 15 parties en masse de poly(propylène/anhydride maléique) à 0,6% en masse d'anhydride maléique tel que commercialisé par la Société EXXON sous la dénomination commerciale PO 1015,
- 25 parties en masse de terpolymère éthylène/propylène/éthylidène norbornène (non étendu à l'huile) tel que commercialisé par la Société EXXON sous la dénomination commerciale VISTALON 8600,
- 10 parties en masse de plastifiant paraffinique tel que commercialisé par la Société TOTAL sous la dénomination commerciale PLAXENE 25110,
- 5 parties en masse de peroxyde de dicumyle tel que commercialisé par la Société HERCULES sous la dénomination commerciale DICUP C, et
- 1 partie en masse de N,N'-m-phénylène-dimaléimide tel que commercialisé par la Société DU PONT DE NEMOURS sous la dénomination commerciale HVA 2 ;

### Elastomère 2 :

- 80 parties en masse de polyoctène ENGAGE 8180,
- 20 parties en masse de poly(propylène/anhydride maléique) PO 1015,
- 10 parties en masse de plastifiant paraffinique PLAXENE 25110,
- 4 parties en masse de peroxyde de dicumyle DICUP C, et
- 1 partie en masse de N,N'-m-phénylène-dimaléimide HVA 2 ;

### Elastomère 3 :

- 85 parties en masse de polyoctène ENGAGE 8180,
- 15 parties en masse de poly(propylène/anhydride maléique) PO 1015,
- 70 parties en masse de plastifiant paraffinique PLAXENE 25110,
- 110 parties en masse de noirs de carbone tels que commercialisés par la Société CABOT sous la dénomination commerciale SPHERON 6000,
- 5 parties en masse de peroxyde de dicumyle DICUP C, et
- 1,5 partie en masse de N,N'-m-phénylène-dimaléimide HVA 2.

Tout en poursuivant le cisaillement, on porte la température interne des mélangeurs à une valeur de 170°C et, lorsque cette température est atteinte, on y maintient les mélanges pendant 5 minutes environ. On refroidit les masses ainsi obtenues au sortir des mélangeurs et on les soumet à une granulation.

On détermine :
- la dureté Shore A selon la méthode décrite dans la norme NF T 46-052,
- la résistance à la rupture (R/R) et l'allongement à la rupture (A/R) selon la méthode décrite dans la norme ISO 37,
   de chacun des élastomères 1, 2 et 3 ainsi préparés, ainsi que :
- la déformation rémanente à la compression (DRC) des élastomères 2 et 3 au terme d'une compression de 25% appliquée pendant 22 heures à 100°C, selon la méthode décrite dans la norme ISO 815, et
- la déformation rémanente à l'allongement (DRA) des élastomères 1 et 2 au terme d'un allongement de 20% appliqué pendant 70 heures et ce, à 70°C pour l'élastomère 1, à 100°C pour les élastomères 1 et 2, et à 125°C pour l'élastomère 2, selon la méthode décrite dans la norme ISO 2285.

Les résultats sont exprimés dans le Tableau 1 ci-après conjointement avec les valeurs de dureté Shore A, de résistance à la rupture (R/R), d'allongement à la rupture (A/R), de déformation rémanente à la compression (DRC) après une compression de 25% appliquée pendant 22 heures à 100°C ainsi que de déformation rémanente à l'allongement (DRA) après des allongements de 20% appliqués pendant 70 heures à 100°C et à 125°C d'un élastomère thermoplastique polyoléfinique de préférence, à savoir le SANTOPRENE 111-73 de la Société AES, telles que mesurées dans les mêmes conditions.

**TABLEAU 1**

| **Elastomères** | **1** | **2** | **3** | **Santoprène** **111-73** |
|---|---|---|---|---|
| Dureté Shore A | 66 | 76 | 77 | 78 |
| R/R (Mpa) | 5,5 | 6,7 | 6,1 | 8,1 |
| A/R(%) | 190 | 440 | 250 | 375 |
| DRC 22 h à 100°C (%) | | 37 | 34 | 40 à 46 |
| DRA 70 h à 70°C (%) | 32 | | | |
| DRA 70 h à 100°C (%) | 44 | 44 | | 53 |
| DRA 70 h à 125°C (%) | | 31 | | 64 |

Le Tableau 1 montre que les élastomères réticulés conformes à l'Invention présentent, non seulement une dureté, une résistance à la rupture et un allongement à la rupture convenables, mais aussi des pourcentages de déformation rémanente à la compression et à l'allongement extrêmement satisfaisants et ce, aussi bien pour une contrainte appliquée à 70°C, 100°C qu'à 125°C.

### EXEMPLE 2 :

On prépare deux élastomères conformes à l'Invention - ci-après élastomère 4 et élastomère 5 - en mélangeant dans un mélangeur interne et sous un cisaillement approprié :

### Elastomère 4 :

- 80 parties en masse de polyoctène ENGAGE 8180,
- 20 parties en masse de poly(propylène/anhydride maléique) PO 1015,
- 70 parties en masse de plastifiant paraffinique PLAXENE 25110,
- 40 parties en masse de silice telle que commercialisée par la Société RHONE POULENC sous la dénomination commerciale ULTRASIL VN3,
- 3 parties en masse de peroxyde de dicumyle DICUP C, et
- 1 partie en masse de N,N'-m-phénylène-dimaléimide HVA 2 ;

### Elastomère 5 :

- 80 parties en masse de polyoctène ENGAGE 8180,
- 18 parties en masse de poly(propylène/anhydride maléique) PO 1015,
- 70 parties en masse de plastifiant paraffinique PLAXENE 25110,
- 100 parties en masse de noirs de carbone SPHERON 6000,
- 3,5 parties en masse de terpolymère styrène/acrylonitrile/acrylate tel que commercialisé par la Société GOODYEAR sous la dénomination commerciale SUNIGUM,
- 3,8 parties en masse de peroxyde de 1,3-bis-(*t*-butylisopropyl)benzène tel que commercialisé par la Société ATOCHEM sous la dénomination commerciale PEROXYMOND F 40,
- 2,5 parties en masse de peroxyde de 1,1-bis-(*t*-butyl)-3,3,5-triméthyl-cyclohexane tel que commercialisé par la Société ATOCHEM sous la dénomination commerciale TRIGONOX 2940,
- 5 parties en masse d'oxyde de zinc actif,
- 0,5 partie en masse d'acide stéarique,
- 1,5 parties de N,N'-m-phénylène-dimaléimide HVA 2, et
- 0,33 partie d'un agent de couplage tel que commercialisé par la Société SUMITOMO sous la dénomination commerciale SUMIFINE 1162.

Comme dans l'exemple 1, on porte la température des mélangeurs à une valeur de 170°C tout en poursuivant le cisaillement, puis, on maintient les mélanges à cette température pendant 5 minutes environ. Les masses ainsi obtenues sont refroidies, puis soumises à une granulation.

On détermine, selon les méthodes décrites dans les normes indiquées dans l'exemple 1, la dureté Shore A, la résistance à la rupture (R/R), l'allongement à la rupture (A/R) et la déformation rémanente à la compression (DRC) après une compression de 25% appliquée pendant 22 heures à 100°C, de chacun des élastomères 4 et 5, ainsi que la déformation rémanente à l'allongement (DRA) de l'élastomère 5 après un allongement de 20% appliqué pendant 70 heures à 100°C.

Les valeurs ainsi obtenues sont exprimées dans le Tableau 2 ci-après. Elles sont comparées avec celles obtenues pour deux élastomères témoins - ci-après élastomères T4 et T5 - présentant respectivement la même composition qualitative et quantitative que les élastomères 4 et 5 et préparés dans les mêmes conditions opératoires que ces derniers, à l'exception toutefois que ces élastomères T4 et T5 renferment un polypropylène non greffé tel que celui commercialisé par la Société SHELL sous la dénomination PP COPOLYMERE en lieu et place du polypropylène greffé d'anhydride maléique utilisé dans la préparation des élastomères 4 et 5.

**TABLEAU 2**

| **Elastomères** | **4** | **T4** | **5** | **T5** |
|---|---|---|---|---|
| Dureté Shore A | 68 | 60 | 71 | 71 |
| R/R(Mpa) | 2,7 | 2,7 | 5,1 | 4,8 |
| A/R (%) | 170 | 420 | 190 | 170 |
| DRC 22 h à 100°C(%) | 62 | 84 | 45 | 60 |
| DRA 70 h à 100°C(%) | | | 36 | 40 |

La comparaison des pourcentages de DRC montre que les élastomères 4 et 5 présentent une déformation rémanente à la compression notablement plus faible que celle des élastomères T4 et T5 servant respectivement de témoins. De plus, on constate que l'élastomère 5 présente une déformation rémanente à l'allongement moindre que celle de l'élastomère T5. Ces résultats mettent ainsi en évidence l'intérêt d'utiliser, conformément à l'Invention, une polyoléfine greffée telle qu'un polypropylène greffé d'anhydride maléique.

### EXEMPLE 3 :

On prépare deux élastomères conformes à l'Invention - ci-après élastomères 6 et 7 - en mélangeant dans deux mélangeurs internes et sous un cisaillement approprié :
- 50 parties en masse de poloctène ENGAGE 8180,
- 41 parties en masse de terpolymère éthylène/propylène/éthylidène norbornène (étendu à l'huile à 15%) tel que commercialisé par la Société EXXON sous la dénomination commerciale VISTALON 8800,
- 80 parties en masse de plastifiant paraffinique PLAXENE 25110,
- 60 parties en masse de noirs de carbone tels que commercialisés par la Société CABOT sous la dénomination commerciale FEF N550,
- 4 parties en masse de peroxyde de 1,3-bis-(*t*-butylisopropyl)benzène PEROXYMOND F 40,
- 3 parties en masse de peroxyde de 1,1-bis-(*t*-butyl)-3,3,5-triméthyl-cyclohexane TRIGONOX 2940,
- 5 parties en masse d'oxyde de zinc actif,
- 1 partie en masse d'acide stéarique,
- 3 parties en masse de diméthacrylate d'éthylène glycol tel que commercialisé par la Société CRAY VALLEY sous la dénomination commerciale SARTOMER SR 206,
- 1 partie en masse d'un lubrifiant externe tel que le DYNAMAR PPA 790 commercialisé par la Société 3M, avec
- pour l'élastomère 6 : 17 parties en masse de poly(propylène/anhydride maléique) PO 1015 à 0,6% en masse d'anhydride maléique, et
- pour l'élastomère 7 : 17 parties en masse de poly(propylène/anhydride maléique) à 1,2% en masse d'anhydride maléique tel que disponible auprès de la Société EXXON.

Comme dans les exemples précédents, la température interne des mélangeurs est portée à une valeur de 170°C tout en poursuivant le cisaillement, puis le mélange est maintenu à cette température pendant 5 minutes environ. Les masses ainsi obtenues sont refroidies au sortir des mélangeurs et soumises à granulation.

On détermine la déformation rémanente à la compression (DRC) de chacun de ces élastomères 6 et 7, au terme d'une compression de 25% appliquée pendant 22 heures à 100°C (norme ISO 815). L'élastomère 6 présente, dans ces conditions, une DRC de 38% alors que l'élastomère 7 présente une DRC qui n'est que de 30%.

Cet exemple montre l'intérêt d'utiliser un poly(propylène/anhydride maléique) à teneur élevée en anhydride maléique, lorsque l'on souhaite obtenir un élastomère conforme à l'Invention présentant une déformation rémanente à la compression particulièrement faible.

### EXEMPLE 4 :

On prépare dans des conditions identiques à celles décrites dans les exemples 1 à 3 deux élastomères conformes à l'Invention - ci-après élastomères 8 et 9 - et comprenant respectivement :

### Elastomère 8 :

- 35 parties en masse de polyoctène tel que commercialisé par la Société DU PONT DOW sous la dénomination commerciale ENGAGE 8190,
- 15 parties en masse de poly(propylène/anhydride maléique) PO 1015,
- 50 parties en masse de terpolymère éthylène/propylène/éthylidène norbornène VISTALON 8800,
- 70 parties en masse de plastifiant paraffinique PLAXENE 25110,
- 100 parties en masse de noirs de carbone SPHERON 6000,
- 8,25 parties en masse de résine bromo-méthyl phénolformaldéhyde alkylée réactive telle que commercialisée par la Société SCHENECTADY sous la dénomination commerciale RESINE SP 1055,
- 5 parties en masse de polyéthylène chlorosulfoné tel que commercialisé par la Société DU PONT DE NEMOURS sous la dénomination commerciale HYPALON 4085,
- 3 parties en masse d'oxyde de zinc actif,

### Elastomère 9 :

- 33 parties en masse de polyoctène ENGAGE 8180,
- 17 parties en masse de poly(propylène/anhydride maléique) à 1,2% en masse d'anhydride maléique,
- 57,5 parties en masse de terpolymère éthylène/propylène/éthylidène norbornène VISTALON 8800,
- 80 parties en masse de plastifiant paraffinique PLAXENE 25110,
- 55 parties en masse de noirs de carbone FEF N550,
- 10 parties en masse de terpolymère éthylène/acrylate/acide acrylique tel que commercialisé par la Société EXXON sous la dénomination commerciale ATX 325,
- 5 parties en masse d'oxyde de zinc actif,
- 1 partie en masse d'acide stéarique,
- 1,25 partie en masse de dibutyldithiocarbamate de zinc (Société MLPC),
- 0,5 partie en masse de disulfure de tétraméthylthiurame (Société MLPC),
- 1,75 partie en masse de 4-4'-dithiodimorpholine (Société MLPC),
- 0,75 partie en masse de tétrasulfure de dipentaméthylènethiurame (Société MLPC).

Le Tableau 3 ci-après indique les valeurs de dureté Shore A, de résistance à la rupture (R/R), d'allongement à la rupture (A/R), de déformation rémanente à la compression (DRC) au terme d'une compression de 25% appliquée pendant 22 heures à 100°C ainsi que de déformation rémanente à l'allongement (DRA) après un allongement de 20% appliqué pendant 70 heures à 100°C, telles qu'obtenues pour chacun des élastomères 8 et 9, selon les méthodes décrites dans les normes indiquées dans l'exemple 1.

**TABLEAU 3**

| **Elastomères** | **8** | **9** |
|---|---|---|
| Dureté Shore A | 65 | 61 |
| R/R (Mpa) | 4,8 | 4,3 |
| A/R (%) | 250 | 250 |
| DRC 22 h à 100°C (%) | 35 | 33 |
| DRA 70 h à 100°C (%) | 44 | 46 |

Ces valeurs montrent qu'une réticulation par une résine phénolique et une réticulation par un système basé sur le soufre permettent d'obtenir des élastomères conformes à l'Invention qui présentent des propriétés mécaniques et des propriétés de rémanence équivalentes.

Ainsi que cela ressort de ce qui précède, l'Invention ne se limite nullement à ceux de ses modes de réalisation et de mise en oeuvre qui viennent d'être décrits de façon plus explicite ; elle en embrasse au contraire toutes les variantes qui peuvent venir à l'esprit du technicien en la matière, sans s'écarter du cadre, ni de la portée de la présente Invention.

## Revendications

1. Elastomère réticulé à transformation thermoplastique, **caractérisé en ce qu'**il comprend au moins un élastomère à polymérisation par un catalyseur métallocène et une polyoléfine greffée.

2. Elastomère selon la Revendication 1, **caractérisé en ce que** l'élastomère à réticulation par un catalyseur métallocène est choisi parmi les polyoctènes.

3. Elastomère selon la Revendication 1 ou la Revendication 2, **caractérisé en ce que** la polyoléfine greffée est choisie parmi le groupe comprenant les polyéthylènes, les polypropylènes et les poly(éthylène/propylène) greffés d'acide acrylique, d'anhydride maléique ou de glycidylméthacrylate.

4. Elastomère selon l'une quelconque des Revendications précédentes, **caractérisé en ce que** ladite polyoléfine greffée est un poly(propylène/anhydride maléique).

5. Elastomère selon la Revendication 4, **caractérisé en ce que** ledit poly(propylène/anhydride maléique) présente une teneur en anhydride maléique supérieure ou égale à 1% en masse de la masse totale dudit poly(propylène/anhydride maléique).

6. Elastomère selon l'une quelconque des Revendications précédentes, **caractérisé en ce qu'**il comprend, de plus, un poly(éthylène/propylène) (EPM) ou un poly(éthylène/propylène/diène) (EPDM),

7. Elastomère selon l'une quelconque des Revendications précédentes, **caractérisé en ce qu'**il comprend en parties en masse :
- 20 à 100 parties d'élastomère à polymérisation par un catalyseur métallocène,
- 5 à 50 parties de polyoléfine greffée, et
- 0 à 75 parties d'EPM ou d'EPDM.

8. Elastomère selon l'une quelconque des Revendications précédentes, **caractérisé en ce qu'**il comprend en parties en masse :
- 30 à 85 parties de polyoctène,
- 10 à 30 parties de poly(propylène/anhydride maléique), et
- 10 à 50 parties d'EPDM.

9. Elastomère selon l'une quelconque des Revendications précédentes, **caractérisé en ce qu'**il comprend, de plus, un élastomère polyacrylique et/ou un plastifiant et/ou des charges du type charges claires ou noirs de carbone et/ou des adjuvants.

10. Elastomère selon l'une quelconque des Revendications précédentes, **caractérisé en ce qu'**il est contient, avant réticulation, au moins un système de réticulation qui comprend un ou plusieurs agents de réticulation et un ou plusieurs promoteurs de réticulation.

11. Elastomère selon la Revendication 10, **caractérisé en ce que** le système de réticulation comprend, comme agent(s) de réticulation, un ou plusieurs peroxydes organiques choisis parmi le groupe qui comprend le peroxyde de dicumyle, le peroxyde de 1,3-bis-(*t*-butylisopropyl)benzène, le peroxyde de 2,5- diméthyl-2,5-bis-*t*-butyl-hexane et le 1,1-bis-(*t*-butyl)- 3,3,5-triméthyl-cyclohexane, et comme promoteur(s) de réticulation, un ou plusieurs composés choisis parmi le groupe qui comprend l'oxyde de zinc, l'acide stéarique, le N,N-m-phénylène-dimaléimide, les cyanurates de triallyle ou de triisoallyle, les méthacrylates, les diméthacrylates, les triméthacrylates et les diacrylates.

12. Elastomère selon la Revendication 10, **caractérisé en ce que** le système de réticulation est basé sur le soufre et comprend, outre de l'oxyde de zinc et/ou de l'acide stéarique en tant que promoteur(s) de réticulation, un ou plusieurs activateurs donneurs de soufre et, éventuellement, un agent anti-réversion.

13. Elastomère selon la Revendication 10, **caractérisé en ce que** le système de réticulation comprend, comme agent de réticulation, une résine phénolique choisie parmi les résines méthyl phénolformaldéhyde et bromo-méthyl-phénolformaldéhyde alkylées réactives, et comme promoteur de réticulation, un polymère chloré, éventuellement associé à de l'oxyde de zinc et/ou de l'acide stéarique.

14. Elastomère selon l'une quelconque des Revendications 10 à 13, **caractérisé en ce que** le ou les agents de réticulation sont présents dans ledit élastomère à hauteur de 1 à 10 parties en masse pour 100 parties en masse du mélange élastomère à polymérisation par un catalyseur métallocène/polyoléfine greffée/EPM ou EPDM.

15. Elastomère selon l'une quelconque des Revendications 10 à 14, **caractérisé en ce que** le ou les promoteurs de réticulation sont présents dans ledit élastomère à hauteur de 0,5 à 12 parties en masse pour 100 parties en masse du mélange élastomère à polymérisation par un catalyseur métallocène/polyoléfine greffée/EPM ou EPDM.

16. Procédé de fabrication d'un élastomère réticulé à transformation thermoplastique selon l'une quelconque des Revendications 1 à 15, **caractérisé en ce qu'**il comprend le mélange d'un élastomère à polymérisation par un catalyseur métallocène et d'une polyoléfine greffée en présence, éventuellement d'un poly(éthylène/propylène) (EPM) ou d'un poly(échylène/propylène/diène) (EPDM), d'un élastomère polyacrylique, d'un plastifiant, de charges et/ou d'adjuvants, et la réticulation de ce mélange par un système de réticulation convenablement choisi à une température appropriée.

17. Procédé selon la Revendication 16, **caractérisé en ce que** la réticulation est effectuée à une température comprise entre 150 et 200°C.

18. Procédé selon la Revendication 16 ou la. revendication 17, **caractérisé en ce qu'**il comprend :
a) le mélange de l'élastomère à polymérisation par un catalyseur métallocène, de la polyoléfine greffée et du système de réticulation en présence, éventuellement, de l'EPM ou de l'EPDM, de l'élastomère polyacrylique, du plastifiant, des charges et/ou des adjuvants ;
b) le chauffage de ce mélange à une température comprise entre 150 et 200°C, et
c) son maintien à cette température pendant un temps compris entre 1 et 15 minutes.

19. Utilisation d'un élastomère réticulé à transformation thermoplastique selon l'une quelconque des Revendications 1 à 15 pour la fabrication de joints et garnitures d'isolation thermique, phonique et/ou d'étanchéité.

20. Utilisation d'un élastomère réticulé à transformation thermoplastique selon l'une quelconque des Revendications 1 à 15 pour la fabrication de conduites, tubes, tuyaux, tubulures, raccords ou analogues pour le transfert de fluides.

## Claims

1. Crosslinked elastomer for thermoplastic processing, **characterised in that** it comprises at least one elastomer for polymerisation by a metallocene catalyst and a grafted polyolefin.

2. Elastomer according to Claim 1, **characterised in that** the elastomer for crosslinking by a metallocene catalyst is selected from the polyoctenes.

3. Elastomer according to Claim 1 or Claim 2, **characterised in that** the grafted polyolefin is selected from the group comprising polyethylenes, polypropylenes, and poly(ethylene/propylene)s grafted with acrylic acid, maleic anhydride or glycidyl methacrylate.

4. Elastomer according to any one of the preceding claims, **characterised in that** the said grafted polyolefin is a poly(propylene/maleic anhydride).

5. Elastomer according to Claim 4, **characterised in that** said poly(propylene/maleic anhydride) has a maleic anhydride content greater than or equal to 1% by mass of the total mass of said poly(propylene/maleic anhydride).

6. Elastomer according to any one of the preceding claims, **characterised in that** it furthermore comprises a poly(ethylene/propylene) (EPM) or a poly(ethylene/propylene/diene) (EPDM).

7. Elastomer according to any one of the preceding claims, **characterised in that** it comprises, in parts by mass:
- from 20 to 100 parts of elastomer for polymerisation by a metallocene catalyst,
- from 5 to 50 parts of grafted polyolefin, and
- from 0 to 75 parts of EPM or EPDM.

8. Elastomer according to any one of the preceding claims, **characterised in that** it comprises, in parts by mass:
- from 30 to 85 parts of polyoctene,
- from 10 to 30 parts of poly(propylene/maleic anhydride), and
- from 10 to 50 parts of EPDM.

9. Elastomer according to any one of the preceding claims, **characterised in that** it furthermore comprises a polyacrylic elastomer and/or a plasticiser and/or fillers such as light fillers or carbon blacks, and/or adjuvants.

10. Elastomer according to any one of the preceding claims, **characterised in that** it contains, before crosslinking, at least one crosslinking system which comprises one or more crosslinking agents and one or more crosslinking promoters.

11. Elastomer according to Claim 10, **characterised in that** the crosslinking system comprises, as crosslinking agents(s), one or more organic peroxides selected from the group which comprises dicumyl peroxide, 1,3-bis-(t-butyl-isopropyl)benzene peroxide, 2,5-dimethyl-2,5-bis-t-butyl-hexane peroxide and 1,1-bis-(t-butyl)-3,3,5-trimethylcyclohexane and, as crosslinking promoter(s), one or more compounds selected from the group which comprises zinc oxide, stearic acid, N,N-m-phenylenedimaleimide, triallyl or triisoallyl cyanurates, methacrylates, dimethacrylates, trimethacrylates and diacrylates.

12. Elastomer according to Claim 10, **characterised in that** the crosslinking system is based on sulphur and comprises, in addition to zinc oxide and/or stearic acid as crosslinking promoter(s), one or more sulphur-donating activators and, optionally, an anti-reversion agent.

13. Elastomer according to Claim 10, **characterised in that** the crosslinking system comprises, as a crosslinking agent, a phenolic resin selected from reactive alkylated methylphenolformaldehyde and bromomethyl-phenolformaldehyde resins, and, as a crosslinking promoter, a chloro polymer optionally in combination with zinc oxide and/or stearic acid.

14. Elastomer according to any one of Claims 10 to 13, **characterised in that** the crosslinking agent or agents are present in said elastomer at a level of from 1 to 10 parts by mass per 100 parts by mass of the mixture of elastomer for polymerisation by a metallocene catalyst/grafted polyolefin/EPM or EPDM.

15. Elastomer according to any one of Claims 10 to 14, **characterised in that** the crosslinking promoter or promoters are present in said elastomer at a level of from 0.5 to 12 parts by mass per 100 parts by mass of the mixture of elastomer for polymerisation by a metallocene catalyst/grafted polyolefin/EPM or EPDM.

16. Process for the manufacture of a crosslinked elastomer for thermoplastic processing according to any one of Claims 1 to 15, **characterised in that** it comprises mixing an elastomer for polymerisation by a metallocene catalyst and a grafted polyolefin in the presence, optionally, of a poly(ethylene/propylene) (EPM) or a poly(ethylene/propylene/diene) (EPDM), a polyacrylic elastomer, a plasticiser, fillers and/or adjuvants, and crosslinking this mixture by a suitably selected crosslinking system at an appropriate temperature.

17. Process according to Claim 16, **characterised in that** the crosslinking is carried out at a temperature of between 150 and 200°C.

18. Process according to Claim 16 or Claim 17, **characterised in that** it comprises:
a) mixing the elastomer for polymerisation by a metallocene catalyst, the grafted polyolefin and the crosslinking system in the presence, optionally, of EPM or EPDM, the polyacrylic elastomer, the plasticiser, the fillers and/or the adjuvants;
b) heating this mixture to a temperature of between 150 and 200°C, and
c) keeping it at this temperature for a period of between 1 and 15 minutes.

19. Use of a crosslinked elastomer for thermoplastic processing according to any one of Claims 1 to 15 for the manufacture of gaskets and packings for thermal, acoustic insulation and/or leakproofing.

20. Use of a crosslinked elastomer for thermoplastic processing according to any one of Claims 1 to 15 for the manufacture of conduits, tubes, pipes, tubings, couplings or the like for the transfer of fluids.

## Patentansprüche

1. Vernetztes Elastomer zur thermoplastischen Transformation, **dadurch gekennzeichnet, daß** es wenigstens ein Elastomer zur Polymerisation mittels eines Metallocen-Katalysators und ein Pfropfpolyolefin aufweist.

2. Elastomer nach Anspruch 1, **dadurch gekennzeichnet, daß** das Elastomer zur Vernetzung mittels eines Metallocen-Katalysators unter den Polyoctenen ausgewählt wird.

3. Elastomer nach Anspruch 1 oder 2, **dadurch gekennzeichnet, daß** das Pfropfpolyolefin aus der Gruppe ausgewählt wird, die die Pfropfpolyethylene, die Pfropfpolypropylene und die Pfropfpoly(ethylen/propylene) von Acrylsäure, von Maleinsäureanhydrid oder von Glycidylmethacrylat umfaßt.

4. Elastomer nach einem der vorhergehenden Ansprüche, **dadurch gekennzeichnet, daß** es sich bei dem Pfropfpolyolefin um ein Poly(propylen/maleinsäureanhydrid) handelt.

5. Elastomer nach Anspruch 4, **dadurch gekennzeichnet, daß** das Poly(propylen/maleinsäureanhydrid) einen Gehalt an Maleinsäureanhydrid von größer oder gleich 1% an Masse, bezogen auf die Gesamtmasse von Poly(propylen/maleinsäureanhydrid), aufweist.

6. Elastomer nach einem der vorhergehenden Ansprüche, **dadurch gekennzeichnet, daß** es weiterhin einen Poly(ethylen/propylen) (EPM) oder ein Poly(ethylen/propylen/dien) (EPDM) aufweist.

7. Elastomer nach einem der vorhergehenden Ansprüche, **dadurch gekennzeichnet, daß** es folgende Massenanteile aufweist:
- 20 bis 100 Anteile an Elastomer zur Polymerisation mittels eines Metallocen-Katalysators,
- 5 bis 50 Anteile an Pfropfpolyolefin und
- 0 bis 75 Anteile an EPM oder EPDM.

8. Elastomer nach einem der vorhergehenden Ansprüche, **dadurch gekennzeichnet, daß** es folgende Massenanteile aufweist:
- 30 bis 85 Anteile an Polyocten,
- 10 bis 30 Anteile Poly(propylen/maleinsäureanhydrid) und
- 10 bis 50 Anteile EPDM.

9. Elastomer nach einem der vorhergehenden Ansprüche, **dadurch gekennzeichnet, daß** es weiterhin ein Polyacrylelastomer und/oder einen Weichmacher und/oder Zuschläge von weißem oder schwarzem Ruß und/oder Adjuvantien aufweist.

10. Elastomer nach einem der vorhergehenden Ansprüche, **dadurch gekennzeichnet, daß** vor der Vernetzung wenigstens ein System zur Vernetzung enthalten ist, das ein oder mehrere Vernetzungsmittel und einen oder mehrere Vernetzungspromotoren aufweist.

11. Elastomer nach Anspruch 10, **dadurch gekennzeichnet, daß** das System zur Vernetzung als Vernetzungsmittel ein oder mehrere organische Peroxide aufweist, die aus der Gruppe ausgewählt sind, die Dicumylperoxid, das Peroxid von 1,3 - Bis - (t-butylisopropyl)benzol, das Peroxid von 2,5 - Dimethyl - 2,5 - bis - t-butyl-hexan und das 1,1 - Bis - (t-butyl) - 3, 3, 5 - trimethylcyclohexan umfaßt und als Vernetzungspromotoren eine oder mehrere Verbindungen, die aus der Gruppe ausgewählt sind, die Zinkoxid, Stearinsäure, N, N - m - Phenyldimaleinsäureimid, Cyanurate von Triallyl oder von Triisoallyl, Methacrylate, Dimethacrylate, Trimethacrylate und Diacrylate umfaßt.

12. Elastomer nach Anspruch 10, **dadurch gekennzeichnet, daß** das System zur Vernetzung auf Schwefel basiert und außer Zinkoxid und/oder Stearinsäure als Vernetzungspromotoren ein oder mehrere schwefelabgebende Aktivatoren und gegebenenfalls ein Antiübertragungsmittel aufweist.

13. Elastomer nach Anspruch 10, **dadurch gekennzeichnet, daß** das System zur Vernetzung als Vernetzungsvermittler ein phenolhaltiges Harz, das aus den alkylierten reaktiven Harzen Methylphenolformaldehyd und Brom-methylphenolformaldehyd ausgewählt wurde und als Vernetzungspromotor ein chloriertes Polymer, gegebenenfalls zusammen mit Zinkoxid und/oder Stearinsäure, aufweist.

14. Elastomer nach einem der Ansprüche 10 bis 13, **dadurch gekennzeichnet, daß** das oder die Vemetzungsmittel in dem Elastomer in einer Menge von 1 bis 10 Massenanteilen, bezogen auf 100 Massenanteile der Elastomermischung, zur Polymerisation mittels eines Metallocen-Katalysator/Pfropfpolyolefin/EPM oder EPDM vorliegen.

15. Elastomer nach einem der Ansprüche 10 bis 14, **dadurch gekennzeichnet, daß** der oder die Promotoren zur Vernetzung in dem Elastomer in einer Menge von 0,5 bis 12 Massenanteilen, bezogen auf 100 Massenanteile Elastomermischung, zur Polymerisation mittels eines Metallocen-Katalysator/Pfropfpolyolefin/EPM oder EPDM vorliegen.

16. Verfahren zur Herstellung eines vernetzten Elastomers zur thermoplastischen Transformation nach einem der Ansprüche 1 bis 15, **dadurch gekennzeichnet, daß** es die Mischung eines Elastomers zur Polymerisation mittels eines Metallocen-Katalysators und eines Pfropfpolyolefins, gegebenenfalls in Gegenwart eines Poly(ethylen/propylen) (EPM) oder eines Poly(ethylen/propylen/dien) (EPDM), eines Polyacrylelastomers, eines Weichmachers, von Zuschlagstoffen und/oder Adjuvantien, und die Vernetzung dieser Mischung durch ein passend gewähltes System zur Vernetzung bei einer geeigneten Temperatur umfaßt.

17. Verfahren nach Anspruch 16, **dadurch gekennzeichnet, daß** die Vernetzung bei einer Temperatur durchgeführt wird, die zwischen 150 und 200 °C liegt.

18. Verfahren nach Anspruch 16 oder 17, **dadurch gekennzeichnet, daß** es umfaßt:
a) die Mischung aus dem Elastomer zur Polymerisation mittels eines Metallocen-Katalysators, dem Pfropfpolyolefin und dem System zur Vernetzung, gegebenenfalls in Gegenwart von EPM oder von EPDM, Polyacrylelastomer, Weichmacher, Zuschlagstoffen und/oder Adjuvantien,
b) die Erwärmung dieser Mischung auf eine Temperatur zwischen 150 und 200 °C und
c) Beibehalten dieser Temperatur für eine Zeitspanne zwischen 1 und 15 Minuten.

19. Verwendung eines vernetzten Elastomers zur thermoplastischen Transformation nach einem der Ansprüche 1 bis 15 zur Herstellung von Dichtungen und Ausrüstungen zur Wärme- und Schalldämmung und/oder zur Abdichtung.

20. Verwendung eines vernetzten Elastomers zur thermoplastischen Transformation nach einem der Ansprüche 1 bis 15 zur Herstellung von Leitungen, Rohren, Schläuchen, Stutzen, Anschlüssen oder Analoga für den Transport von Fluiden.
